# DEMANDE DE BREVET EUROPEEN

(11) **EP 0 721 870 A1**
(43) Date de publication de la demande: **17.07.1996**
(21) Numéro de dépôt: 96400073.1
(22) Date de dépôt: 12.01.1996
(51) Int. Cl.: B60S 1/34

(54) **Essuie-glace perfectionné de véhicule automobile**

(30) Priorité: 16.01.1995 FR 9500485
(71) Demandeur: PAUL JOURNEE S.A., F-60240 Reilly (FR)
(72) Inventeur: Journee, Maurice, F-60240 Reilly (FR)
(74) Mandataire: Gamonal, Didier

(57) **Abrégé**

Essuie-glace de véhicule automobile du type comportant un bras d'essuie-glace (10) articulé sur une tête d'entraînement (16) autour d'un axe (X-X), un ressort à boudin (28) agencé dans un logement (22) et qui agit sur le bras (10) en exerçant une force d'essuyage dont la droite support (Y-Y) est décalée par rapport à l'axe (X-X), l'une des extrémités du ressort (28) étant reliée au bras d'essuie-glace (10) en un point (46) décalé par rapport à l'axe (Y-Y) du ressort, par l'intermédiaire d'une tige de liaison (34) qui s'étend dans le prolongement de l'axe (Y-Y) du ressort (28) et qui est guidé en coulissement selon cet axe par un coussinet de guidage (48), caractérisé en ce que le coussinet de guidage est réalisé sous la forme d'un élément rapporté sur la tête d'entraînement (16).

## Description

La présente invention concerne un essuie-glace perfectionné de véhicule automobile.

L'invention concerne plus particulièrement un essuie-glace de véhicule automobile du type comportant un bras d'essuie-glace articulé sur une tête d'entraînement autour d'un axe d'articulation qui s'étend transversalement par rapport à la direction longitudinale générale de l'essuie-glace, du type comportant un ressort à boudin agencé dans un logement longitudinal de la tête d'entraînement et qui agit sur le bras d'essuie-glace en exerçant une force d'essuyage dont la droite support est décalée par rapport à l'axe d'articulation, et du type dans lequel l'une des extrémités du ressort est reliée au bras d'essuie-glace, en un point décalé par rapport à l'axe général du ressort, par l'intermédiaire d'une tige de liaison qui s'étend dans le prolongement de l'axe du ressort et qui est guidée en coulissement selon cet axe par un coussinet de guidage en coulissement.

Une telle conception permet d'assurer un essuyage efficace tout en obtenant un encombrement global réduit de la tête d'entraînement, et notamment de l'épaisseur de cette dernière.

La présente invention concerne un perfectionnement à une telle conception qui vise à simplifier le montage et la réalisation des composants.

Dans ce but, l'invention propose un essuie-glace du type mentionné précédemment, caractérisé en ce que le coussinet de guidage est réalisé sous la forme d'un élément rapporté sur la tête d'entraînement.

Selon d'autres caractéristiques de l'invention :
- le coussinet comporte un corps qui délimite un conduit de guidage de la tige de liaison du ressort ;
- le corps du coussinet comporte une fente longitudinale qui débouche transversalement dans le conduit de guidage pour permettre l'introduction transversale de la tige de liaison dans le conduit de guidage ;
- le corps du coussinet est réalisé en deux parties pour permettre l'introduction de la tige de liaison dans le conduit de guidage ;
- le corps du coussinet est fixé par collage ou par soudage sur la tête d'entraînement ;
- le corps du coussinet est fixé par sertissage sur la tête d'entraînement ;
- le corps du coussinet est emboîté élastiquement dans un évidement complémentaire de la tête d'entraînement ;
- le corps du coussinet présente une forme de bloc parallélépipédique ;
- le coussinet est un tube de guidage ;
- une bague tubulaire en matériau à faible coefficient de friction est interposée entre le conduit de guidage et la tige de liaison du ressort ;
- la tête d'entraînement est une pièce en tôle découpée et emboutie ;
- la tête d'entraînement est une pièce réalisée par moulage, notamment en matière plastique.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en section longitudinale partielle d'un premier exemple de réalisation d'une tête d'entraînement et d'un bras d'essuie-glace conforme aux enseignements de l'invention dans lequel la tête d'entraînement est une pièce en tôle et dans lequel le ressort d'essuyage est un ressort de traction ;
- la figure 2 est une vue partielle en perspective de dessous de la tête d'entraînement illustrée sur la figure 1 permettant de représenter le coussinet de guidage en position collée dans la tête d'entraînement ;
- la figure 3 est une vue en perspective d'une variante de réalisation du coussinet de guidage représenté aux figures 1 et 2 ;
- la figure 4 est une vue similaire à celle de la figure 2 qui illustre une variante de réalisation dans laquelle la tête d'entraînement est une pièce moulée ;
- la figure 5 est une vue en section transversale selon la ligne 5-5 de la figure 4 ;
- la figure 6 est une vue de détail illustrant une variante de réalisation de la tête d'entraînement et du mode de montage d'un coussinet de guidage réalisé sous la forme d'un tube de guidage ;
- la figure 7 est une vue similaire à celle de la figure 6 qui illustre une variante de réalisation des moyens de fixation du tube de guidage ; et
- la figure 8 est une vue de détail qui illustre une variante de réalisation du tube de guidage et des moyens de blocage longitudinal de ce dernier.

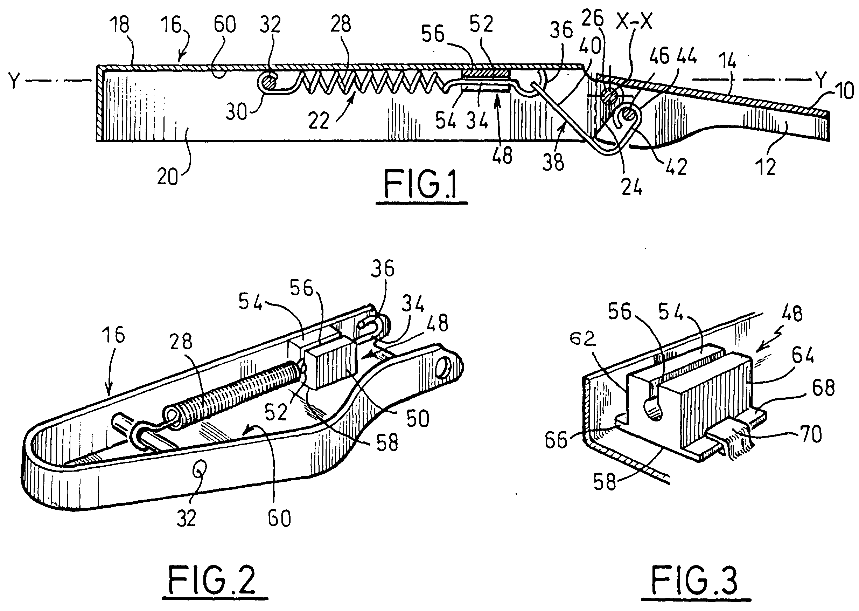

On a représenté à la figure 1 une partie d'un bras d'essuie-glace 10 qui est une pièce allongée qui présente en section transversale une forme de U renversé et qui comporte deux joues latérales parallèles 12 reliées entre elles par un dos supérieur 14.

Le bras d'essuie-glace 10 est monté articulé autour d'un axe géométrique d'articulation X-X sur une tête d'entraînement 16.

Dans le mode de réalisation illustré sur la figure 1, la tête d'entraînement 16 est illustrée de manière schématique sous la forme d'une pièce en tôle découpée et emboutie qui comporte un dos supérieur 18 et deux joues latérales 20 qui délimitent un logement interne 22.

Les portions d'extrémité 24 des joues latérales 20 reçoivent une tige ou pivot d'articulation 26 dont les extrémités libres sont reçues dans les trous correspondants formés dans les joues latérales 12 du bras d'essuie-glace 10 pour assurer l'articulation de ce dernier sur la tête d'entraînement 16 autour de l'axe X-X.

L'ensemble illustré sur la figure 1 comporte également un ressort d'essuie-glace 28 qui est un ressort à boudin, également appelé ressort hélicoïdal, de traction dont une première extrémité en forme de crochet 30 est accrochée sur une tige transversale 32 qui s'étend entre les joues 20 du corps de la tête d'entraînement 16.

La seconde extrémité 34 du ressort de traction 28 constitue une tige de liaison qui s'étend selon l'axe général Y-Y du ressort et qui est également la droite support de la force de traction que le ressort 28 est susceptible d'exercer.

L'extrémité en forme de tige de liaison 34 se termine par une boucle ouverte 36 pour son accrochage sur un crochet de liaison 38.

Le crochet 38 comporte une première branche 40 sur laquelle est accrochée la boucle 36 de la tige de liaison 34 et une seconde branche 42 dont l'extrémité recourbée 44 est accrochée sur une tige transversale d'accrochage 46 qui s'étend transversalement entre les joues 12 du bras d'essuie-glace.

La tige de liaison 34 assure donc l'accrochage indirect du ressort d'essuyage, de traction 28, sur le bras d'essuie-glace 10 en un point 46 qui est décalé verticalement par rapport à l'axe général Y-Y du ressort comme on peut le voir sur la figure 1.

Afin de pouvoir appliquer au bras d'essuie-glace 10, par l'intermédiaire du crochet 38, une force d'essuyage, la tige de liaison est guidée en coulissement, conformément aux enseignements de l'invention, dans un coussinet de guidage 48 rapporté sur le corps de la tête d'entraînement 16.

Comme on peut le voir aux figures 1 et 2, le corps 50 du coussinet de guidage 48 se présente sous la forme d'une pièce parallélépipédique rectangle dans laquelle est formé un conduit axial débouchant de guidage 52 de forme générale cylindrique à l'intérieur duquel est reçu la tige de guidage 34.

L'une des faces 54 du corps 50 du coussinet 48 comporte une fente 56 destinée à permettre l'introduction transversale de la tige de guidage 34 dans le conduit de guidage.

Dans ce premier mode de réalisation, le coussinet de guidage 48 est fixé en appui par sa face 58 opposée à la face 54 contre la face interne 60 du dos 18, par exemple par collage ou par soudage.

Selon une première variante de réalisation qui n'est pas représentée sur les figures, il est possible de réaliser le corps 50 du coussinet de guidage 48 en deux parties afin de permettre l'introduction de la tige de guidage 34 dans le conduit de guidage 52 par lequel passe le plan de joint des deux parties du corps, ces deux parties étant ensuite reliées entre elles par sertissage ou par collage.

Selon cette variante, le coussinet 48 préalablement mis en place sur la tige de guidage 34 est ensuite fixé par collage ou soudage sur la tête d'entraînement 16.

On a représenté sur la figure 3 une variante de réalisation du coussinet 48 dont les faces latérales 62 et 64 comportent chacune une patte latérale 66, 68 qui permet la fixation par sertissage ou par emboîtement élastique du coussinet 48 dans des crochets 70 qui sont par exemple réalisés venus de matière par découpe et emboutissage dans le dos 18 de la tête d'entraînement 16.

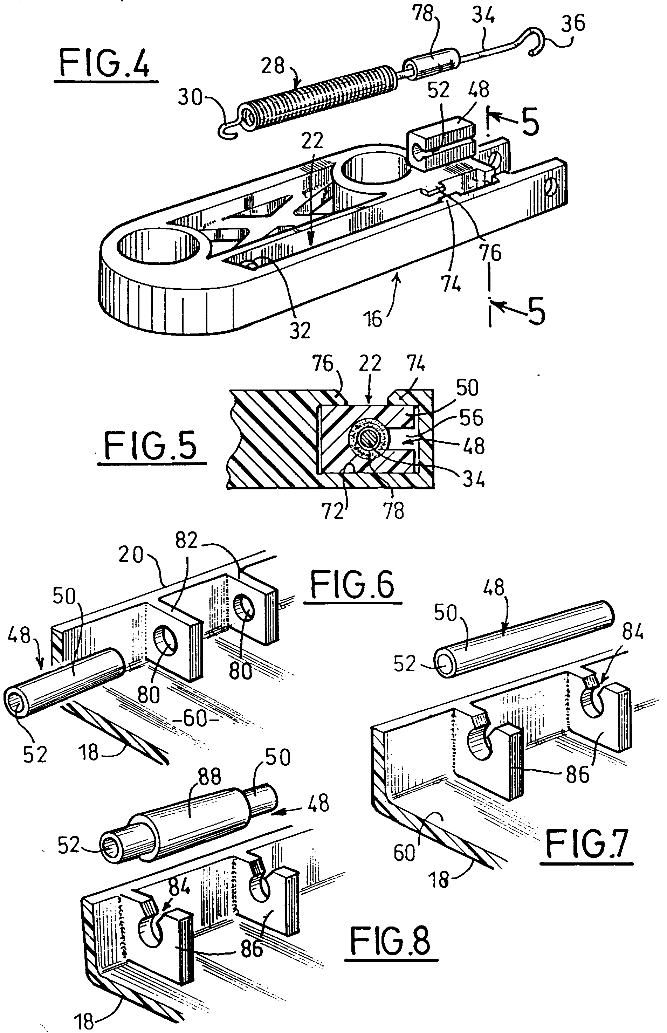

On décrira maintenant la variante de réalisation illustrée sur les figures 4 et 5 sur laquelle on voit que la tête d'entraînement 16 est une pièce moulée.

Le coussinet de guidage 48 est une pièce rapportée de forme similaire à celle illustrée aux figures 1 et 2 qui est emboîtée élastiquement à l'intérieur du logement ouvert 22 et qui prend appui contre le fond 72 de ce logement.

Le corps 50 du coussinet de guidage 48 est maintenu en position dans le logement 22 par des becs de retenue 74 et 76, le coussinet 48 pouvant être mis en place sous les becs de retenue 74 et 76 par coulissement dans le logement 22 ou par emboîtement élastique en forçant son passage entre les becs chanfreinés.

Comme on peut le voir également sur la figure 4, il est prévu une bague de forme tubulaire cylindrique 78, réalisée en un matériau à faible coefficient de friction qui équipe la tige de guidage 34 et qui est interposée entre cette dernière et le conduit de guidage 52 pour faciliter le mouvement de coulissement de la tige de guidage 34 par rapport au coussinet de guidage 48.

Dans la variante de réalisation illustrée à la figure 6, le coussinet de guidage 48 est réalisé sous la forme d'un tube de guidage dont le corps 50 est emmanché à force dans des trous 80 formés dans des pattes latérales 82 qui s'étendent depuis une joue latérale 20.

L'alésage central du tube de guidage 48 constitue le conduit de guidage 52 au sens de l'invention.

Dans la variante de réalisation illustrée sur la figure 7, le tube de guidage 48 est emboîté élastiquement dans des ouvertures 84 formées dans des pattes 86 qui s'étendent depuis la face interne 60 du dos 18.

Enfin, on a représenté sur la figure 8 une variante dans laquelle le corps 50 du coussinet 48 peut être emmanché à force dans un manchon de blocage axial 88 destiné à être interposé entre les pattes 86.

## Revendications

1. Essuie-glace de véhicule automobile du type comportant un bras d'essuie-glace (10) articulé sur une tête d'entraînement (16) autour d'un axe d'articulation (X-X) qui s'étend transversalement par rapport à la direction longitudinale générale de l'essuie-glace et du type comportant un ressort à boudin (28) agencé dans un logement longitudinal (22) de la tête d'entraînement (16) et qui agit sur le bras d'essuie-glace (10) en exerçant une force d'essuyage dont la droite support (Y-Y) est décalée par rapport à l'axe d'articulation (X-X), du type dans lequel l'une des extrémités du ressort (28) est reliée au bras d'essuie-glace (10) en un point (46) décalé par rapport à l'axe général (Y-Y) du ressort, par l'intermédiaire d'une tige de liaison (34) qui s'étend dans le prolongement de l'axe (Y-Y) du ressort (28) et qui est guidé en coulissement selon cet axe par un coussinet de guidage (48), caractérisé en ce que le coussinet de guidage est réalisé sous la forme d'un élément rapporté sur la tête d'entraînement (16).

2. Essuie-glace selon la revendication 1, caractérisé en ce que le coussinet de guidage (48) comporte un corps (50) qui délimite un conduit (52) de guidage de la tige (34) de liaison du ressort (28).

3. Essuie-glace selon la revendication 2, caractérisé en ce que le coussinet (48, 50) comporte une fente longitudinale (56) qui débouche transversalement dans le conduit de guidage (52) pour permettre l'introduction transversale de la tige de liaison (34) dans le conduit de guidage (52).

4. Essuie-glace selon la revendication 2, caractérisé en ce que le corps (50) du coussinet (48) est réalisé en deux parties pour permettre l'introduction de la tige de liaison (34) dans le conduit de guidage (52).

5. Essuie-glace selon l'une quelconque des revendications précédentes, caractérisé en ce que le corps (50) du coussinet (48) est fixé par collage ou par soudage sur la tête d'entraînement (16, 18, 60).

6. Essuie-glace selon l'une quelconque des revendications 1 à 4, caractérisé en ce que le corps (50) du coussinet (48) est fixé par sertissage (66, 68, 70) sur la tête d'entraînement (16, 70).

7. Essuie-glace selon l'une quelconque des revendications 1 à 4, caractérisé en ce que le corps (50) du coussinet (48) est emboîté élastiquement dans un évidement complémentaire (22, 74, 76) de la tête d'entraînement (16).

8. Essuie-glace selon l'une quelconque des revendications précédentes, caractérisé en ce que le corps du coussinet (48) présente une forme de bloc parallélépipédique.

9. Essuie-glace selon l'une quelconque des revendications précédentes, caractérisé en ce que le coussinet (48) est un tube de guidage.

10. Essuie-glace selon l'une quelconque des revendications précédentes, caractérisé en ce qu'une bague tubulaire en matériau à faible coefficient de friction (78) est interposée entre le conduit de guidage (52) et la tige de liaison (34) du ressort.

11. Essuie-glace selon l'une quelconque des revendications précédentes, caractérisé en ce que la tête d'entraînement (16) est une pièce en tôle découpée et emboutie.

12. Essuie-glace selon l'une quelconque des revendications 1 à 10, caractérisé en ce que la tête d'entraînement est une pièce réalisée par moulage.
